# EUROPÄISCHE PATENTSCHRIFT

(11) **EP 0 263 326 B1**
(45) Veröffentlichungstag und Bekanntmachung des Hinweises auf die Patenterteilung: **10.11.1993**
(21) Anmeldenummer: 87113371.6
(22) Anmeldetag: 12.09.1987
(51) Int. Cl.: C08F 2/30, C08F 18/04, C08F 20/12, C08F 18/08, C08F 20/06

(54) **Verfahren zur Herstellung von wässrigen, konzentrierten Polymerisatdispersionen auf Basis von Vinyl- und/oder Acrylsäureestern**
Process for preparing aqueous concentrated dispersions of polymers based on vinylic and/or acrylic esters
Procédé de préparation de dispersions aqueuses concentrées de polymères à base d'esters vinyliques et/ou acryliques

(30) Priorität: 04.10.1986 DE 3633940
(43) Veröffentlichungstag der Anmeldung: 13.04.1988
(73) Patentinhaber: Pfersee Chemie GmbH, 86460 Langweid a. Lech (DE)
(72) Erfinder: Singer, Heinrich, D-8901 Horgau (DE); Stechele, Werner, D-8901 Diedorf (DE)

(56) Entgegenhaltungen:
- EP-A- 0 082 408
- AT-B- 14 738
- US-A- 3 963 688

## Beschreibung

Die vorliegende Erfindung betrifft ein Verfahren zur Herstellung von wäßrigen, konzentrierten Polymerisatdispersionen auf Basis von vinyl- und/oder Acrylsäureestern durch Polymerisation der Monomeren in üblicher Weise, wobei als zusätzlicher Emulgator eine geringe Menge eines ausgewählten Phosphorsäuretriesters eingesetzt wird.

Aus der EP-PS 065 253 ist ein Verfahren zur Herstellung von konzentrierten Polyacrylatdispersionen bekannt, bei welchen unter sonst üblichen Bedingungen ein weiterer Emulgator, nämlich ein Sulfobernsteinsäuredialkylester mit 8 bis 18 C-Atomen im Alkylrest in geringen Mengen mitverwendet wird. Dieses Verfahren bringt eine gewisse Verbesserung in der Stabilität der Dispersionen mit sich, jedoch weisen dieselben für eine leichte Handhabung für viele Zwecke eine zu hohe Viskosität auf. Vor allem aber bringt das bekannte Verfahren bei der Herstellung von Polymerisatdispersionen auf Basis von Vinylestern kaum entscheidende Vorteile.

Die EP-A 0 037 150 beschreibt ein Verfahren zur Herstellung wäßriger Dispersionen von wasserlöslichen Polymeren, bei dem mindestens ein Monomeres mit einer Phosphorsäure-, Sulfonsäure- oder Carbonsäuregruppe sowie mindestens ein Emulgator mitverwendet wird, der eine Polyoxyäthylenkette mit zwischen 60 und 400 Oxyäthyleneinheiten enthält. Die US-A 39 63 688 beschreibt ein Verfahren zur Emulsionspolymerisation, bei dem ein Phosphorsäuremono- oder -diester bzw. Salze davon mitverwendet werden. Die EP-A 0 082 408 beschreibt ein Verfahren zur Polymerisation in wäßriger Dispersion in Gegenwart freier Säuren als Dispergatoren.

Es wurde nun gefunden, daß man bei der Herstellung von wäßrigen, konzentrierten Polymerisatdispersionen auf Basis von Vinyl- und/oder Acrylsäureestern in Gegenwart eines ausgewählten Phosphorsäuretriesters in geringen Mengen die nach dem Stand der Technik bestehenden Mängel beseitigen kann. Das erfindungsgemäße Verfahren ist im Patentanspruch 1 wiedergegeben. In den Unteransprüchen 2 bis 4 werden besondere Ausgestaltungen dieses Verfahrens beschrieben. Die Patentansprüche 5 und 6 schließlich stellen die nach diesem Verfahren erhältlichen Polymerisatdispersionen unter Schutz.

Die Herstellung wäßriger, konzentrierter Polymerisatdispersionen auf Basis von Vinyl- und/oder Acrylsäureestern ist grundsätzlich bekannt. Im allgemeinen werden neben dem Vinylacetat und/oder Vinylpropionat als Basismonomere Acrylsäureester von Alkanolen mit 1 bis 8, insbesondere mit 2 bis 8 C-Atomen verwendet. Beispiele für letztere sind Ethylacrylat, 2-Ethylhexylacrylat und insbesondere n-Butylacrylat. Selbstverständlich sind auch Mischungen aus den Vinylestern und Acrylsäureestern als Basismonomere einsetzbar, wobei Basismonomer bedeutet, daß zumindest 60 Gew.%, insbesondere zumindest 85 Gew.%, bezogen auf die Summe der zu polymerisierenden Monomere, an diesen Monomeren enthalten sind.

Als Monomere, die mit den Basismonomeren copolymerisierbar sind, seien ohne Anspruch auf Vollständigkeit folgende genannt (Angaben in Klammern beziehen sich auf die Summe der Monomeren).

Styrol (1 bis 25 Gew.%), 2-Hydroxyethyl- bzw. 3-Hydroxypropyl-(meth)acrylat (2 bis 10 Gew.%), Alkylmethacrylate mit 2 bis 8 C-Atomen im Alkylrest (2 bis 20 Gew.%), Alkylacrylat mit mehr als 8 C-Atomen im Alkylrest (1 bis 12 Gew.%), (Meth)acrylsäure (1 bis 5 Gew.%), (Meth)acrylsäureamide oder N-Methylolamide bzw. mit Alkoholen mit 1 bis 4 C-Atomen veretherte N-Methylolamide α, β-ungesättigter Carbonsäuren oder Gemische solcher Monomere (0,5 bis 5 Gew.%), Acrylnitril (1 bis 10 Gews.%) und Versaticsäurevinylester (2 bis 12 Gew.%).

Die fertigen konzentrierten Dispersionen weisen in der Regel einen Feststoffgehalt von mindestens 40 Gew.%, insbesondere 45 bis 70 Gew.% auf. Die Herstellung der Emulsionen erfolgt üblicherweise in Gegenwart von Emulgatoren. Als Emulgatoren werden hierbei im allgemeinen die bekannten anionischen und nicht-ionogenen Verbindungen herangezogen. Der Fachmann kennt die verwendeten Alkylbenzolsulfonate, Sulfobernsteinsäuredialkylester und die sulfatierten, gegebenenfalls ethoxylierten Schwefelsäureester von Alkylphenolen oder Fettalkoholen bzw. die ethoxylierten Fettalkohole, Fettamide, Fettsäuren, Alkylphenole und Fettamine bzw. deren Salze und wird keine Schwierigkeiten haben, diese Verbindungen entsprechend auszuwählen.

Das erfindungsgemäße Merkmal liegt nun darin, daß neben den obengenannten üblichen Emulgatoren eine geringe Menge eines Phosphorsäuretriesters der allgemeinen Formel (I) 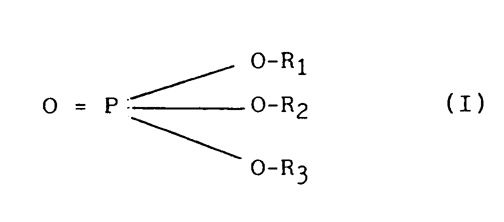
in der
R₁ = (̵ CH₂-CH₂O)ₓ-Q,
R₂ = (̵ CH₂-CH₂O)_{y}H
mit der Maßgabe, daß bei
y = 0, R₂ gleich R₁ ist
und R₃ bei
y = 0 gleich R₁ bzw. bei
y ungleich 0 gleich R₁ oder R₂
ist, wobei x ganze Zahlen von 2 bis 10, y ganze Zahlen von 0 bis 10 und Q einen gesättigten oder ungesättigten Alkylrest bzw. Alkenylrest mit 8 bis 30 C-Atomen bedeuten, verwendet wird. Da es sich hierbei um technische Produkte handelt, können bei den Werten für x und y geringfügige Abweichungen vorliegen und die tertiären Ester geringe Mengen an Mono- und Diestern enthalten. Es handelt sich bei den angegebenen Werten für x und y also um Durchschnittswerte.

Grundsätzlich ist eine gewisse gegenseitige Beeinflussung der Werte für x und y erkennbar. So kann bei hohen Werten für x z.B. 4, 6 oder 8 Ethylenoxideinheiten, die Anzahl der Ethylenoxidgruppen für y niedrig und sogar Null werden, wobei dann definitionsgemäß R₂ = R₁ ist Ähnliches gilt auch umgekehrt.
Letzten Endes sind die Werte für x und y davon abhängig, welche Bedeutung der Rest R₃ hat, der aber bei technischen Produkten gewissen Schwankungen unterworfen ist. In der Verbindung der Formel (I) ist R₃ im Regelfall gleich R₁ bzw. bei y ungleich 0 R₁ oder R₂.

Beispiele für Verbindungen der Formel (I) sind folgende:
(1) Verbindung mit x = 2, y = 7 und Q = eine technische Mischung aus gesättigten C 25 bis C 30 Alkylresten,
(2) Verbindung mit x = 2, y = 7 und Q = der Laurylrest,
(3) Verbindung mit x = 4, y = 0 und Q = eine technische Mischung aus gesättigten und ungesättigten C ₁₂ bis C₂₀ Alkylresten bzw. Alkenylresten, also der tertiäre Ester der o-Phosphorsäure eines mit 4 Ethylenoxyd ethoxilierten technischen Fettalkohols.
(4) Verbindung mit x = 2, y = 5 und Q = ein gesättigter C₁₆ - C₁₈-Alkylrest,
(5) Verbindung mit x = 4, y= 0 und Q = Laurylrest, also der tertiäre Ester der o-Phosphorsäure eines mit 4 Ethylenoxid ethoxylierten Laurylalkohols und
(6) Verbindung mit x = 8, y = 0 und Q ein ungesättigter C₁₈-Alkenylrest, also der tertiäre Ester der o-Phosphorsäure eines mit 8 Ethylenoxid ethoxylierten Oleylalkohols.

Verbindungen dieser Art sind im Handel z.B. als ®HOSTAPHAT L 327, W 327, O 380 oder L 340 von der Firma HOECHST erhältlich.

Die erfindungsgemäße Verbindung der Formel (I) wird in Mengen von 0,05 bis 1,5, insbesondere 0,05 bis 1,0 Gew.%, ganz besonders bevorzugt in Mengen von 0,1 bis 0,5 Gew.%, bezogen auf die gesamte Dispersion, eingesetzt. Das vorliegende Verfahren zeichnet sich dabei insgesamt gesehen neben anderen Vorteilen auch durch eine Verringerung der notwendigen Gesamtmenge von Emulgator aus.

Die Gesamtmenge von Emulgator, enthaltend den üblichen anionischen und/oder nicht-ionogenen Emulgator und die Verbindung der Formel (I) nachfolgend als Emulgatorsystem bezeichnet - liegt bei bis zu 5 Gew.%, bezogen auf die gesamte Dispersion, doch werden Dispersionen mit einem hervorragenden Gesamteindruck schon bei Einsatz von nur 3 Gew.% oder von sogar weniger als 1,0 Gew.% an Emulgatorsystem, bezogen auf die gesamte Dispersion, erhalten, vor allem bei Verwendung von Acrylaten als Basismonomere.

Die Herstellung der Polymerisatdispersionen ist grundsätzlich bekannt. Im allgemeinen wird eine Monomeremulsion bereitet, die neben den Basismonomeren und gegebenenfalls weiteren Comonomeren auch das Emulgatorsystem enthält. Die eigentliche Polymerisation wird nun in bekannter Weise vorgenommen. Einzelheiten sind dem Fachmann geläufig.

Die erhaltenen wäßrigen Dispersionen dienen sowohl zur Griff- und Steifausrüstung von Fasermaterialien, als auch zur Beschichtung und Kaschierung von Textilmaterialien. Der Einsatz solcher Polymerisatdispersionen ist dabei allgemein bekannt. Bei der Textilausrüstung werden dieselben in Mengen von 5 bis 80 g/l in üblicher Weise eingesetzt. Für die Beschichtung werden diese Produkte auf bekanntem Wege verpastet und dann in ebenfalls bekannter Weise eine Feststoffauflage von 5 bis 70 g/m² auf dem textilen Material aufgebracht.

Es muß als überraschend angesehen werden, daß durch die Mitverwendung der Verbindungen der Formel (I) im Rahmen eines Emulgatorsystems die Gesamtmenge an Emulgator relativ niedrig sein kann, wobei die Stabilität der Dispersionen keineswegs leidet, sondern im Gegenteil diese Dispersionen eine wesentlich verbesserte Lagerstabilität aufweisen. Das zeigt sich vor allem darin, daß die erfindungsgemäß hergestellten Polymerisierungsdispersionen auch nach monatelanger Lagerung keine Feststoffteilchen bilden und auch keine Koagulation feststellbar ist. Daneben ist gegenüber dem Stand der Technik hervorzuheben, daß die erfindungsgemäß erhaltenen Dispersionen eine merklich geringere Viskosität aufweisen, so daß erst durch das vorliegende Verfahren eine allzeit problemlose Verarbeitung der Dispersionen möglich wird. Zusammenfassend muß man also festhalten, daß die konzentrierten Dispersionen trotz Einsatz einer verringerten Emulgatormenge niedrig viskos und lagerstabil sind und somit den vielfältigen Anforderungen der Praxis voll entsprechen.
Die in den Beispielen angegebenen Teile sind Gewichtsteile.

### Beispiel 1

Zur Herstellung einer Polymerisatdispersion wird folgende Voremulsion bereitet:
In 200 Teile Wasser werden 25 Teile eines ethoxylierten technischen Stearylalkohols (insgesamt 35 Ethylenoxidgruppen je Mol) und 5 Teile HOSTAPHAT L 327 (= Emulgatorsystem) bei 90 bis 95°C gelöst, auf 40°C abgekühlt und in diese Lösung
470 Teile Vinylacetat eingerührt.

Es werden nun in 308 Teile Wasser 50 Teile der obenbeschriebenen Voremulsion vorgelegt, auf 60°C erwärmt die entstandene Mischung mit 12 ml 5-%iger Kaliumpersulfatlösung geimpft und während 1 1/2 Stunden bei 70 bis 75°C die restliche Emulsion zulaufen gelassen. Abschließend wird noch 1 Stunde bei der genannten Temperatur nachgerührt. Die erhaltene dünnflüssige Polymerisatdispersion ist äußerst stabil und zeigt auch nach 3 Monaten keine festen Abscheidungen. In gleicher Weise kann mit einem Emulgatorsystem aus 12 Teilen des obengenannten ethoxylierten Stearylalkohols und 8 Teilen HOSTAPHAT L 327 gearbeitet werden.

Wird in gleicher Weise anstelle des verwendeten Emulgatorsystems nur unter Einsatz von 30 Teilen des genannten ethoxylierten technischen Stearylalkohols gearbeitet, so ist keine Dispersion erhältlich, sondern das Monomere koaguliert aus, d.h. die Emulgatormenge ist nicht ausreichend zur Erzielung einer einheitlichen Dispersion.

### Beispiel 2

Zur Herstellung einer Polymerisatdispersion wird unter den im Beispiel 1 angegebenen Bedingungen eine Voremulsion aus folgenden Bestandteilen bereitet:
160 Teile Wasser,
30 Teile Emulgatorsystem aus
26 Teilen des in Beispiel 1 genannten ethoxylierten technischen Stearylalkohols,
4 Teilen HOSTAPHAT L 327,
50 Teile 20 %ige wäßrige Methylolacrylamidlösung,
210 Teile Vinylacetat und
210 Teile Butylacrylat.

Die Polymerisation wird in der in Beispiel 1 beschriebenen Weise vorgenommen, wobei ein sehr gut filtrierbares Produkt erhalten wird, das keinen Rückstand aufweist und auch nach wochenlangem Lagern stabil bleibt.

Wird in gleicher Weise anstelle des verwendeten Emulgatorsystems nur unter Einsatz von 30 Teilen des genannten ethoxylierten technischen Stearylalkohols gearbeitet, so wird eine Dispersion erhalten, die das Filter verklebt, also kaum filtrierbar ist und auch deutliche Rückstände aufweist. Die Lagerstabilität dieser Emulsion ist nicht gewährleistet. Die eingesetzte Emulgatormenge reicht zur Herstellung einer einheitlichen Dispersion nicht aus.

### Beispiel 3

Zur Herstellung einer Polymerisatdispersion wird folgende Voremulsion bereitet:
In 400 Teile Wasser werden 30 Teile eines Emulgatorsystems bestehend aus
12 Teilen eines ethoxylierten Isotridecylalkohols (insgesamt 40 Ethylenoxidgruppen je Mol),
12 Teilen sulfatiertes Nonylphenolethoxylat mit 25 Ethylenoxid je Mol und
6 Teilen der Verbindung (3) bei 60 bis 70°C gelöst, auf etwa 40°C abgekühlt und in diese Lösung eine Mischung aus 30 Teilen Versaticsäurevinylester,
550 Teilen Vinylacetat und 150 Teilen Vinylpropionat eingerührt.

Es werden nun in 358 Teilen Wasser 50 Teile der obenbeschriebenen Voremulsion vorgelegt und dann wie im Beispiel 1 beschrieben, die Polymerisation durchgeführt. Es wird eine weiße, dünnflüssige, äußerst haltbare Polymerisatdispersion erhalten. Gegebenenfalls kann mit einem Reduktionsmittel wie Natriumbisulfit oder dem Na-Salz der Hydroxymethansulfinsäure nachkatalysiert werden.

In gleicher Weise kann auch eine Emulsion dadurch hergestellt werden, daß 650 Teile Vinylacetat und 70 Teile Versaticsäurevinylester anstelle der obengenannten Monomerenmischung zur Herstellung der Voremulsion herangezogen werden.

### Beispiel 4

In einem mit Rührer, Rückflußkühler und 2 Tropftrichtern versehenen Dreihalskolben werden 90 Teile Wasser und 0,5 Teile Na₂S₂O₈ vorgelegt und diese Vorlage unter Rückflußkühlung auf 85°C aufgeheizt. In der Zwischenzeit wird ein Zulauf (A) aus folgenden Bestandteilen
336 Teile Ethylacrylat,
10,5 Teile Acrylsäure,
3,5 Teile Acrylamid,
0,8 Teile 25 %iger wäßriger Ammoniak,
80 Teile Wasser und
ein Emulgatorsystem aus 1 Teile sulfatiertem, mit 25 Ethylenoxid ethoxiliertem Schwefelsäureester des Nonylphenols und 1 Teile der Verbindung (2) und ein Zulauf (B) aus 1,05 Teilen Na₂S₂O₈ und 16 Teilen Wasser bereitet.

In die heiße Vorlage werden nun 15 Teile von Zulauf (A) zugegeben und 15 Minuten gerührt. Innerhalb von 3 Stunden werden anschließend die Zuläufe (A) und (B) gleichmäßig und kontinuierlich bei 85°C eingebracht und abschließend noch 2 Stunden bei 90°C nacherwärmt. Es wird eine dünnflüssige, feinteilige Polymerisatdispersion erhalten, die sich gut filtrieren läßt und auch nach mehreren Monaten keine festen Abscheidungen aufweist.

Wird in gleicher Weise nach dem Stand der Technik gearbeitet (EP-PS 65 253 Beispiel 2) und dabei anstelle der Verbindung (2) der dort angegebene Sulfobernsteinsäuredialkylester in gleicher Weise eingesetzt, so erhält man eine hochviskose, kaum filtrierbare Dispersion, die den Anforderungen an eine gute Handhabung nicht gerecht wird.

### Beispiel 5

Zur Herstellung einer Polymerisatdispersion wird unter den in Beispiel 1 angegebenen Bedingungen eine Voremulsion aus folgenden Bestandteilen bereitet:
400 Teile Wasser
45 Teile Emulgatorsystem aus
35 Teilen eines mit 30 Ethylenoxid ethoxylierten Nonylphenolpolyglykolethers und
10 Teilen der Verbindung (5),
50 Teile 20 %ige wäßrige Methylolacrylamidlösung,
700 Teile Vinylacetat und
10 Teile 2-Hydroxiethylacrylat.

Die Polymerisation wird wie im Beispiel 1 beschrieben durchgeführt, wobei ein niedrig viskoses, stabiles gut filtrierbares Produkt erhalten wird, das monatelang lagerfähig ist.

Gegebenenfalls kann mit einem Reduktionsmittel nachkatalysiert werden.
Zu gleich guten Ergebnissen gelangt man, wenn folgendes Monomerengemisch in gleicher Weise polymerisiert
560 Teile n-Butylacrylat,
70 Teile n-Decylacrylat,
112 Teile Acrylnitril und
28 Teile N-Methylolacrylamid in Form der 20 %igen wäßrigen Lösung.

## Patentansprüche

1. Verfahren zur Herstellung von wäßrigen, konzentrierten Polymerisatdispersionen auf Basis von Vinyl- und/oder Acrylsäureestern durch Polymerisation der Monomeren in üblicher Weise, wobei 60 bis 100 Gew.% an Vinylacetat, Vinylpropionat und/oder Acrylsäureestern von 1 bis 8 C-Atomen enthaltenden Alkanolen als Basismonomer und 0 bis 40 Gew.% damit copolymerisierbare Monomere eingesetzt werden, dadurch gekennzeichnet, daß als zusätzlicher Emulgator 0,05 bis 1,5 Gew.%, bezogen auf die gesamte Dispersion, eines Phosphorsäuretriesters der allgemeinen Formel (I) 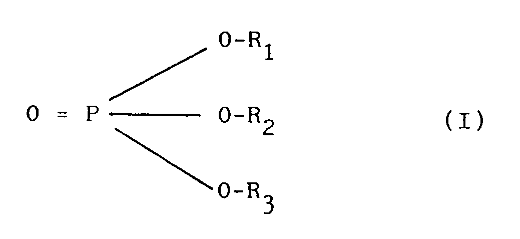 in der
R₁ = (̵CH₂-CH₂O)ₓ-Q,
R₂ = (̵CH₂-CH₂O)_{y}H
mit der Maßgabe, daß bei
y = 0 R₂ gleich R₁ ist und
R₃ bei y = 0 gleich R₁ bzw. bei
y ungleich 0 R₁ oder R₂
ist, wobei
x ganze Zahlen von 2 bis 10,
y ganze Zahlen von 0 bis 10 und
Q einen gesättigten oder ungesättigten Alkylrest bzw. Alkenylrest mit 8 bis 30 C-Atomen bedeuten, eingesetzt wird.

2. Verfahren nach Patentanspruch 1, dadurch gekennzeichnet, daß der zusätzliche Emulgator der Formel (I) in Mengen von 0,05 bis 1,0 Gew.%, bezogen auf die gesamte Dispersion, eingesetzt wird.

3. Verfahren nach den Patentansprüchen 1 und 2, dadurch gekennzeichnet, daß in der Formel (I)
x ganze Zahlen von 2 bis 8,
y ganze Zahlen von 0 bis 7 und
Q einen gesättigten Alkylrest mit 10 bis 30 C-Atomen bedeuten.

4. Verfahren nach Patentanspruch 1 - 3, dadurch gekennzeichnet, daß als Basismonomere Vinylacetat und/oder Vinylpropionat eingesetzt werden.

5. Polymerisatdispersion auf Basis von Vinylacetat, Vinylpropionat und/oder Acrylsäureester, erhältlich durch ein Verfahren nach einem der Patentansprüche 1 bis 4.

6. Polymerisatdispersion nach Patentanspruch 5 auf Basis von Vinylacetat und/oder Vinylpropionat.

## Claims

1. Process for the preparation of aqueous, concentrated polymer dispersions based on vinyl and/or acrylic esters by polymerisation of the monomers in the usual manner, using 60 to 100% by weight of vinyl acetate, vinyl propionate and/or acrylic esters of alkanols containing 1 to 8 C atoms as the base monomer and 0 to 40% by weight of monomers copolymerisable therewith, characterised in that an additional emulsifier is used comprising 0.05 to 1.5% by weight, relative to the entire dispersion, of a phosphoric triester of the general formula (I) 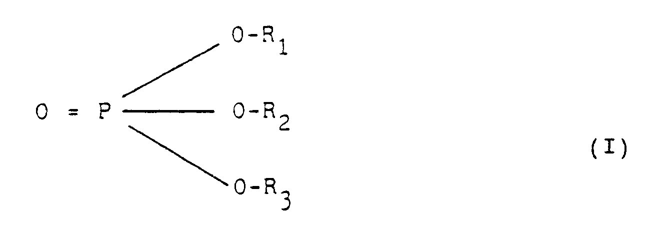 in which
R₁ is (̵CH₂-CH₂O)ₓ-Q,
R₂ is (̵CH₂-CH₂O)_{y}H,
with the proviso that if
y is 0, R₂ is R₁ and
if y is 0, R₃ is R₁ or
if y is not 0, R₃ is R₁ or R₂,
x denoting integers from 2 to 10,
y denoting integers from 0 to 10 and
Q denoting a saturated or unsaturated alkyl radical or alkenyl radical having 8 to 30 C atoms.

2. Process according to Claim 1, characterised in that the additional emulsifier of the formula (I) is used in amounts of 0.05 to 1.0% by weight, relative to the entire dispersion.

3. Process according to Claims 1 and 2, characterised in that in the formula (I)
x denotes integers from 2 to 8,
y denotes integers from 0 to 7 and
Q denotes a saturated alkyl radical having 10 to 30 C atoms.

4. Process according to Claims 1-3, characterised in that the base monomers used are vinyl acetate and/or vinyl propionate.

5. Polymer dispersion based on vinyl acetate, vinyl propionate and/or acrylic esters, obtainable by a process according to any of Claims 1 to 4.

6. Polymer dispersion according to Claim 5 based on vinyl acetate and/or vinyl propionate.

## Revendications

1. Procédé de préparation de dispersions aqueuses concentrées de polymères à base d'esters vinyliques et/ou de l'acide acrylique, par polymérisation des monomères de façon usuelle, procédé selon lequel on utilise 60 à 100 % en poids d'acétate de vinyle, de propionate de vinyle et/ou d'esters de l'acide acrylique d'alcanols contenant 1 à 8 atomes de carbone, comme monomère de base, et 0 à 40 % en poids de monomères copolymérisables avec le monomère de base, caractérisé en ce qu'on utilise comme émulsifiant supplémentaire 0,05 à 1,5 % en poids, par rapport à la dispersion totale, d'un triester de l'acide phosphorique de formule générale (I) 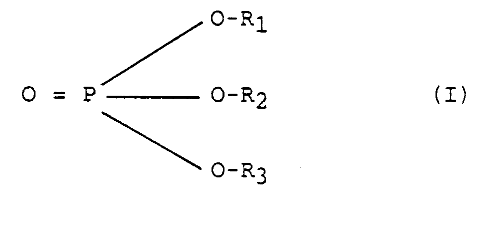 dans laquelle:
R₁ représente = (̵ CH₂ -CH₂O)ₓ-Q,
R₂ représente = (̵ CH₂ -CH₂O)_{y} H
à la condition que,
lorsque y est nul, R₂ est identique à R₁ et ,
lorsque y est nul, R₃ est identique à R₁ ou bien, lorsque y est différent de 0, R₃ a le même sens que R₁ ou R₂,
et x représente des nombres entiers valant 2 à 10,
y représente des nombres entiers valant 0 à 10 et,
Q est un reste alkyle ou un reste alcényle, saturé ou non-saturé, ayant 8 à 30 atomes de carbone.

2. Procédé selon la revendication 1, caractérisé en ce qu'on utilise l'émulsifiant supplémentaire de formule (I) en quantités de 0,05 à 1,0 % en poids, par rapport à la dispersion totale.

3. Procédé selon les revendications 1 et 2, caractérisé en ce que, dans la formule (I) ,
x représente des nombres entiers valant 2 à 8,
y représente des nombres entiers valant 0 à 7, et
Q est un reste alkyle saturé ayant 10 à 30 atomes de carbone.

4. Procédé selon les revendications 1-3, caractérisé en ce qu'on utilise comme monomères de base l'acétate de vinyle et/ou le propionate de vinyle.

5. Dispersion de polymère à base d'acétate de vinyle, de propionate de vinyle et/ou d'un ester d'acide acrylique, que l'on peut obtenir par un procédé selon l'une quelconque des revendications 1 à 4.

6. Dispersion de polymère selon la revendication 5, qui est à base d'acétate de vinyle et/ou de propionate de vinyle.
